(19) Europäisches Patentamt
European Patent Office
Office européen des brevets

(11) **EP 1 818 576 A2**

(12) **EUROPEAN PATENT APPLICATION**

(43) Date of publication:
**15.08.2007 Bulletin 2007/33**

(51) Int Cl.:
***F16H 61/662*** (2006.01)

(21) Application number: **07002437.7**

(22) Date of filing: **05.02.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **08.02.2006 JP 2006030986**

(71) Applicant: **JATCO Ltd**
**Fuji-shi,**
**Shizuoka 417-8585 (JP)**

(72) Inventors:
• **Shimazu, Takamitsu**
**Fuji-shi**
**Shizuoka 417-8585 (JP)**

• **Hagiwara, Yoshichika**
**Fuji-shi**
**Shizuoka 417-8585 (JP)**
• **Ochiai, Tatsuo**
**Fuji-shi**
**Shizuoka 417-8585 (JP)**
• **Abe, Kousuke**
**Fuji-shi**
**Shizuoka 417-8585 (JP)**

(74) Representative: **Schaeberle, Steffen**
**Hoefer & Partner**
**Patentanwälte**
**Pilgersheimer Strasse 20**
**81543 München (DE)**

(54) **Hydraulic pressure control device for vehicle continuously variable transmisison**

(57) A hydraulic pressure control device is provide for a belt type continuously variable transmission that appropriately controls hydraulic pressure supplied to each pulley. The hydraulic pressure control device has a positive input torque calculation section that calculates a positive input torque that is inputted to a primary pulley from an engine; a reverse input torque calculation section that calculates a reverse input torque based on the calculated speed ratio and the positive input torque; and a hydraulic pressure regulation section that calculates a hydraulic pressure of hydraulic fluid supplied to each pulley depending on the sum of the positive input torque and reverse input torque and controls hydraulic pressure to each the pulley to the calculated hydraulic pressure.

Fig. 1

EP 1 818 576 A2

**Description**

CROSS-REFERENCE TO RELATED APPLICATIONS

This application claims priority to Japanese Patent Application No. 2006-030986, filed on February 8, 2006. The entire disclosure of Japanese Patent Application No. 2006-030986 is hereby incorporated herein by reference.

BACKGROUND OF THE INVENTION

Field of the Invention

The present invention generally relates to a hydraulic pressure control device of a belt type continuously variable transmission for a vehicle.

Background Information

When a vehicle having a conventional belt type continuously variable transmission is traveling on off-road terrain, a possibility exists that a drive wheel may begin to slip. After the drive wheel that has been slipping regains traction, there is possibility that the belt may slip on the pulleys of the continuously variable transmission due to an input torque from the drive wheel regaining traction. Thus, there is a need to balance the input torque resulting from the drive wheel regaining traction and the input torque to the primary pulley from the engine. In order to prevent the belt of the continuously variable transmission from slipping, a torque capacity control has been proposed, for example, in Japanese Laid-Open Patent Publication No. 2004-116606. In this publication, the torque capacity control attempts to prevent the belt of the continuously variable transmission from slipping by increasing hydraulic pressures supplied to the primary and secondary pulleys to raise torque capacity of the belt upon detecting a loss of traction in the drive wheel.

In view of the above, it will be apparent to those skilled in the art from this disclosure that there exists a need for an improved hydraulic pressure control device. This invention addresses this need in the art as well as other needs, which will become apparent to those skilled in the art from this disclosure.

SUMMARY OF THE INVENTION

It is the practice according to the conventional art, mentioned above, to perform pressure regulation to always set hydraulic pressure supplied to each of pulleys at the greatest hydraulic pressure that is permissible in view of the capacity of a continuously variable transmission. However, it is necessary to control the hydraulic pressure supplied to each of pulleys in order to prevent of slipping of the belt on the pulleys due to an unknown input torque (called hereinafter "a reverse input torque") is applied to the primary pulley from a drive wheel side against an input torque (called hereinafter "a positive input torque") that is applied to the primary pulley from an engine side. On this account, friction of the continuously variable transmission increases and might cause a temperature rise in the working oil or hydraulic fluid and a drop in durability of an oil pump.

Therefore, an object of the present invention is to provide a hydraulic pressure control device for a belt type continuously variable transmission system of a vehicle, which can adequately control the hydraulic pressure for preventing slipping of the belt of the continuously variable transmission.

In accordance with one aspect of the present invention, a hydraulic pressure control device is provided that basically comprises a speed ratio calculation section, a running state determination section, a positive input torque calculation section, a reverse input torque calculation section, a primary pressure regulation section, a secondary pressure regulation section and a hydraulic pressure calculation section. The speed ratio calculation section is configured to calculate a speed ratio between a primary pulley and a secondary pulley of a belt type continuously variable transmission. The running state determination section is configured to determine if a vehicle running state exists in which a reverse input torque will be likely to be inputted to the primary pulley from a drive wheel side. The positive input torque calculation section is configured to calculate a positive input torque that is inputted to the primary pulley from an engine. The reverse input torque calculation section is configured to calculate a reverse input torque based on the speed ratio and the positive input torque that were calculated. The primary pressure regulation section is configured to perform pressure regulation of hydraulic fluid supplied to the primary pulley. The secondary pressure regulation section is configured to perform pressure regulation of hydraulic fluid supplied to the secondary pulley. The hydraulic pressure calculation section is configured to regulate a target hydraulic pressure of hydraulic fluid supplied to the primary pulley and a target hydraulic pressure of hydraulic fluid supplied to the secondary pulley depending on a sum of the positive input torque and the reverse input torque that were calculated and to control the primary pressure regulation section and the secondary pressure regulation section obtain target hydraulic pressures of the primary pulley and the secondary pulley.

These and other objects, features, aspects and advantages of the present invention will become apparent to those skilled in the art from the following detailed description, which, taken in conjunction with the annexed drawings, discloses a preferred embodiment of the present invention.

BRIEF DESCRIPTION OF THE DRAWINGS

Referring now to the attached drawings which form a part of this original disclosure:

Figure 1 is a simplified schematic view of a vehicle equipped with a belt type continuously variable transmission in accordance with a first embodiment of the present invention;

Figure 2 is a graph for explaining the relationship between an input torque to a continuously variable section and the slipping of a V-belt;

Figure 3 is a time chart for explaining hydraulic pressure control when there is a changeover from an on-road running state to an off-road running state;

Figure 4 is a characteristic view of a reverse input torque;

Figure 5 is a flow chart showing the control operations executed by the control unit in order to calculate the supply hydraulic pressures to a primary pulley and a secondary pulley;

Figure 6 is a map of necessary secondary pressure depending on speed ratio and total torque; and

Figure 7 is a map of necessary primary pressure depending on speed ratio and total torque.

DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

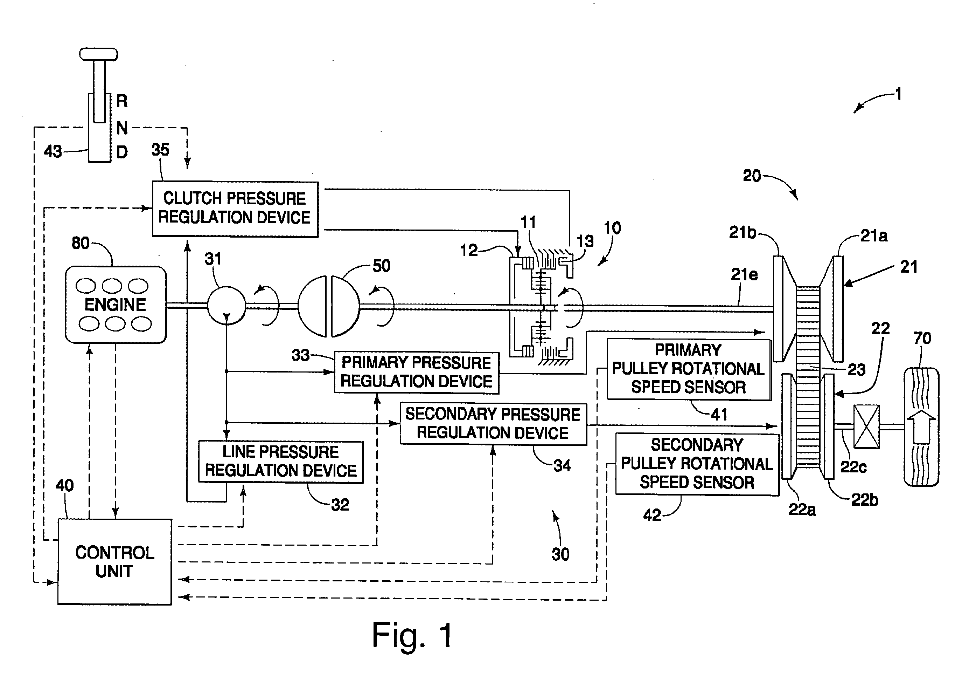

Referring initially to Figure 1, a vehicle 1 is schematically illustrated that is equipped with a first embodiment of the present invention. The belt vehicle 1 basically includes, among other things, a clutch section 10, a belt type continuously variable transmission 20, a hydraulic pressure regulation section 30 and a control unit 40. The belt type continuously variable transmission 20 has a primary pulley 21, a secondary pulley 22 and a V-belt 23. The V belt 23 winds around the primary pulley 21 and the secondary pulley to transmit rotation of the primary pulley 21 to the secondary pulley 22.

The hydraulic pressure regulation section 30 has a hydraulic pressure pump 31, a line pressure regulation device 32, a primary pressure regulation device 33, a secondary pressure regulation device 34 and a clutch pressure regulation device 35.

The control unit 40 preferably includes a microcomputer with a torque control program that controls the hydraulic pressure regulation section 30 and the engine 60 as discussed below. The control unit 40 controls engine torque and speed by controlling fuel injection amount to the engine 60 and throttle position. The control unit 40 can also include other conventional components such as an input interface circuit, an output interface circuit, and storage devices such as a ROM (Read Only Memory) device and a RAM (Random Access Memory) device. It will be apparent to those skilled in the art from this disclosure that the precise structure and algorithms for the control unit 40 can be any combination of hardware and software that will carry out the functions of the present invention. In other words, "means plus function" clauses as utilized in the specification and claims should include any structure or hardware and/or algorithm or software that can be utilized to carry out the function of the "means plus function" clause.

The vehicle 1 is configured and arranged to control the rotational speed of an engine 60 that variably transmits a rotational torque to one or more drive wheels 70. In addition, the vehicle that is equipped with the belt type continuously variable transmission 20 of the present invention also has a torque converter 50 located between the engine 60 and the clutch section 10. This torque converter 50 is a conventional torque converter, which includes a turbine, an impeller and a stator. Thus, the torque converter 50 transmits torque from the engine 60 by controlling the flow of oil filling its interior in a conventional manner. The torque converter 50 also preferably has a so-called lock-up mechanism.

The input torque $T_{in}$ and the output torque $T_{out}$ of the torque converter 50 can be expressed by the following equations (1) and (2), respectively:

$$T_{in} = \tau \times Ne^2 \qquad\qquad (1)$$

$$T_{out} = \tau \times Ne^2 \times t \qquad\qquad (2)$$

where: Ne represents engine speed (rpm.);
τ represents a torque converter capacity coefficient; and
t represents a torque converter torque ratio.

In this way, engine speed determines the torque to be transmitted by the torque converter 50.

The clutch section 10 has a planetary gear set 11, a forward clutch 12 and a reverse brake 13. The planetary gear set 11 is configured to change power transmission paths between the engine 60 and the primary pulley 21. The clutch section 10 uses hydraulic pressure supplied by a clutch pressure regulation device 35 for operating the forward clutch 12 and the reverse brake 13. In particular, the clutch section 10 engages the forward clutch 12 at the time of forward drive of the vehicle, and engages the reverse brake 13 at the time of reverse drive of the vehicle. Also, the clutch section 10 releases both of the forward clutch 12 and the reverse brake 13 at a neutral position (Neutral or Parking). The clutch pressure regulation device 35 controls a state of engagement of each of the forward clutch 12 and the reverse brake 13 by regulating hydraulic pressures (forward clutch pressure & reverse clutch pressure) supplied to the forward clutch 12 and the reverse brake 13 in accordance with control signals from the control unit 40.

Engagement of the forward clutch 12 and engagement of the reverse brake 13 are performed exclusively by controlling the supply of hydraulic pressure to the forward clutch 12 and the reverse brake 13. The supply of hydraulic pressure to the forward clutch 12 and the reverse brake 13 is controlled such that a forward clutch pressure engages the forward clutch 12 and a reverse clutch pressure releases the reverse brake 13 at the time of forward drive (range signal = D range). The supply of hydraulic pressure to the forward clutch 12 and the reverse brake 13 is further controlled such that the forward clutch pressure releases the forward clutch 12 and the reverse clutch pressure engages the reverse brake 13 at the time of rearward drive (range signal = R range). In the neutral position (range signal = N range), supply of hydraulic pressure to the forward clutch 12 and the reverse brake 13 is further controlled such that the forward clutch pressure and the reverse clutch pressure release the forward clutch 12 and the reverse brake 13.

The primary pulley 21 is a pulley on the input shaft side to input rotation from the engine 60. The primary pulley 21 has a stationary conical sheave 21a and a movable conical sheave 21b. The stationary conical sheave 21a is fixed to an input shaft 21c so that the stationary conical sheave 21a rotates together with the input shaft 21 c. The movable conical sheave 21 b faces the stationary conical sheave 21a to form a V-shaped pulley groove therebetween. The movable conical sheave 21b is also fixed to the input shaft 21 c so that the stationary conical sheave 21a rotates together with the input shaft 21 c. However, the movable conical sheave 2 1 b is slideably mounted on the input shaft 2 1 c so that the movable conical sheave 21b can be displaced in an axial direction by hydraulic pressure applied to the primary pulley. This hydraulic pressure that is applied to the primary pulley 21 will be called "primary pressure" herein. The rotational speed of the primary pulley 21 is detected a primary pulley rotational speed sensor 41.

The secondary pulley 22 is rotated by the V belt 23, which is rotated by the primary pulley 21. The secondary pulley 22 then transmits rotation to at least one drive wheel 70 via an idler gear and a differential gear in a conventional manner. The secondary pulley 22 has a stationary conical sheave 22a and a movable conical sheave 22b. The stationary conical sheave 22a is fixed to an output shaft 22c so that the stationary conical sheave 22a rotates together with the output shaft 22c. The movable conical sheave 22b faces the stationary conical sheave 22a to form a V-shaped pulley groove therebetween. The movable conical sheave 22b is also fixed to the output shaft 22c so that the stationary conical sheave 22a rotates together with the output shaft 22c. However, the movable conical sheave 22b is slideably mounted on the output shaft 22c so that the movable conical sheave 22b can be displaced in an axial direction by hydraulic pressure applied to the secondary pulley 22. This hydraulic pressure that is applied to the secondary pulley 22 will be called "secondary pressure" herein. Pressure acting area of the secondary pulley 22 and pressure acting area of the primary pulley 21 are the same or approximately equal to each other. The rotational speed of the secondary pulley 22 is detected a secondary pulley rotational speed sensor 42. In addition, a vehicle speed is calculated by the rotational speed of the secondary pulley 22.

The hydraulic pressure pump 31 is connected to an input side of the clutch section 10 and driven by the engine 60, and feeds oil at the required pressures.

The line pressure regulation device 32 regulates pressure of the oil fed by the hydraulic pressure pump 31 in accordance with an order (for example, a duty signal etc.) from the control unit 40 to an appropriate level of line pressure variable depending on different driving states.

The primary pressure regulation device 33 is a device to control the primary pressure, and it is constituted, for example, by a solenoid, the servo link and stepper motor which cooperate with each other to form a mechanical feedback mechanism, and etc.

The secondary pressure regulation device 34 performs further pressure reduction of the line pressure regulated by the line pressure regulation device 32 in accordance with an order from the control unit 40 to an appropriate level of secondary pressure variable depending on different driving states.

The clutch pressure regulation device 35 performs pressure regulation using hydraulic pressure from the hydraulic pressure pump 31 as a base pressure to produce forward clutch pressure and reverse clutch pressure. The clutch pressure regulation device 35 regulates the forward clutch pressure and the reverse clutch pressure in accordance with hydraulic pressure order values from the control unit 40 to carry out engagement and/or release of the forward clutch 12 and the reverse brake 13.

The control unit 40 determines hydraulic pressure order values based on a driving state and a driving operation that are indicated by a vehicle speed signal from the secondary pulley rotational speed sensor 42, a range signal from an inhibitor switch 43 that operates with a shift lever, an engine rotational speed signal from the engine 60 (or the engine control device), and etc. Further, the inhibitor switch 43 shows an example of choosing any one of a forward drive (D range), a neutral position = neutral (N range), and a reverse (R range).

In addition, the control unit 40 controls the clutch pressure regulation device 35 to regulate the hydraulic pressures supplied to the forward clutch 12 and the reverse brake 13 to control the forward clutch pressure and the reverse brake pressure, and thus, to control the states of engagement of the forward clutch 12 and the reverse brake 13.

Furthermore, the control unit 40 determines a target speed ratio by reading an input torque information, a ratio (a speed ratio) between the primary pulley rotational speed and the secondary pulley rotational speed, a selector position from the inhibitor switch 43, a vehicle speed (the secondary pulley rotational speed), a depression amount of the accelerator pedal, a hydraulic fluid (oil) temperature, hydraulic pressure and etc. The control unit 40 then determines target pressure values of the primary pressure and secondary pressure to accomplish the target speed ratio. The control unit 40 then controls the line pressure regulation device 32, the primary pressure regulation device 33, and the secondary pressure regulation device 34 to accomplish the target pressure values. Thus, the control unit 40 regulates hydraulic pressures supplied to the primary pulley 21 and secondary pulley 22 such that the movable conical sheave 21 b and movable conical sheave 22b are moved in directions along the axes of rotation of the pulleys 21 and 22 to vary a pulley width of the primary pulley 21 and a pulley width of the secondary pulley 22. Then, the V-belt 23 moves on the primary pulley 21 and the secondary pulley 22 to vary the contact radius of the V-belt 23 with the primary pulley 21 and the secondary pulley 22, controlling the speed ratio.

The rotational speed of the engine 60 is inputted to the belt type continuously variable transmission 20 via the torque converter 50 and the clutch section 10, and the torque is transmitted from the primary pulley 21 to the drive shaft of the drive wheel 70 via the V-belt 23 and the secondary pulley 22.

When the accelerator pedal is depressed and/or there is a shift change to the manual mode, the control unit 40 moves the movable conical sheave 21 b of the primary pulley 21 and the movable conical sheave 22b of the secondary pulley 22 in the axial directions to vary the contact radius of the V belt 23 for continuously varying the speed ratio.

Next, a description of hydraulic pressure control that is executed in the control unit 40 to prevent slipping of the V belt 23 will now be explained.

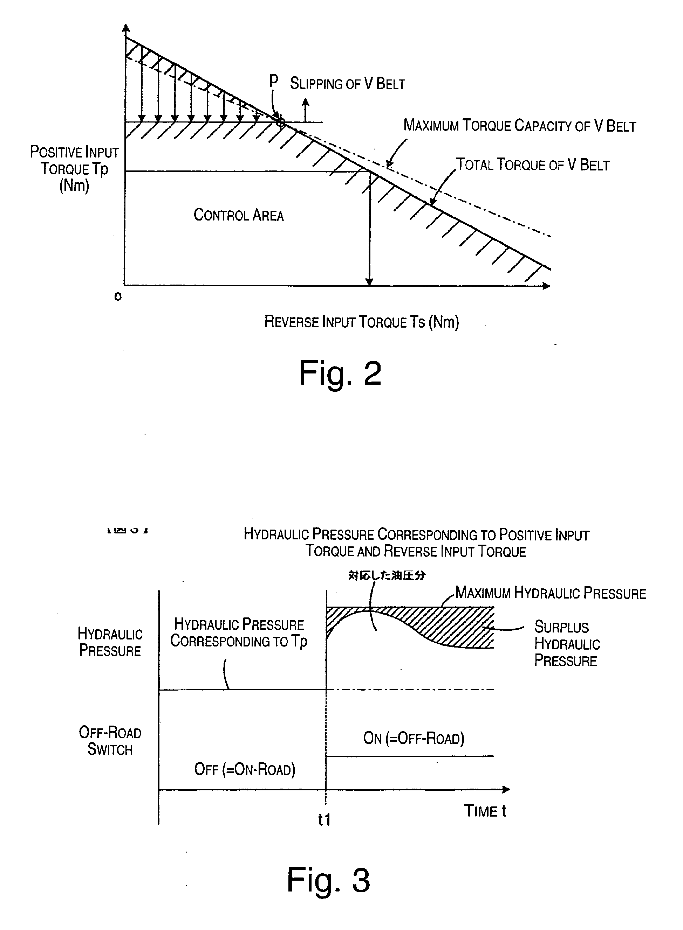

First, referring to Figure 2, the relationship between an input torque to the V belt 23 of the continuously variable transmission 20 and the slipping of the V belt 23 will be explained. Assuming the speed ratio to be a predetermined value in Figure 2, the vertical axis represents the positive input torque Tp and the horizontal axis represents the reverse input torque Ts. As mentioned before, the total torque of the positive input torque which is inputted to the primary pulley 21 from the engine 60 and the reverse input torque which is inputted to the primary pulley 21 from the drive wheel 70 becomes an input torque to the V belt 23. In Figure 2, the maximum of the total input torque is indicated by a solid line representing the inverse relationship between the positive input torque and the reverse input torque. The maximum torque capacity that the V belt 23 can transmit is indicated by one-dot chain line, which represents the inverse relationship between the positive input torque and the reverse input torque. The total input torque is indicated by a line having an inclination that is greater than an inclination of the maximum torque capacity. Therefore, greater and less relationship indicated by these two lines reverses at a certain input torque Tp. In other words, this means that, when the total torque to the V belt 23 is greater than the maximum torque capacity (an area shadowed by bold slanted lines in Figure 2), the slipping of V belt 23 and deformation of the V belt 23 will occur even if hydraulic pressure supplied to each of the pulleys 21 and 22 is maximized. In this case, the slipping of V belt 23 is restricted by lowering the positive input torque Tp by, for example, controlling output torque of the engine 60.

For example, the control area which the hydraulic pressure control by the control unit 40 covers is an area indicated by the slanted lines in Figure 2 that includes the area in which the slipping of the V belt 23 is prevented by controlling the output torque of the engine 60 in the above-mentioned manner. The control area which the hydraulic pressure control by the control unit 40 covers is an area in which the maximum torque capacity of the V belt 23 is greater than the maximum of total torque to the V belt 23.

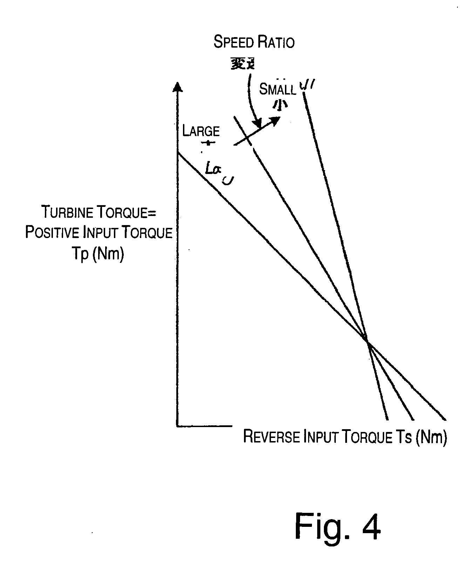

Next, referring to Figures 3 and 4, the description hydraulic pressure control according to the present invention will now be explained.

Figure 3 is a time chart explaining hydraulic pressure control when there is a changeover, in a running state, from an on-road running state that is suitable for on-road driving where the reverse input torque Ts does not occur to an off-road running state that is suitable for an off-road driving where the reverse input torque Ts occurs.

First, a driver operates a running mode selection switch, not illustrated, to select an on-road running state and drives the vehicle in the on-road running state. For driving in the on-road running state, the system does not need to consider the reverse input torque in supplying the hydraulic pressure.

At time t1, when the driver selects the off-road running state, this causes a change to the off-road running state in which the maximum speed ratio is larger than the maximum speed ratio of the on-road running state. Here, the conventional hydraulic pressure control always keeps maximum hydraulic pressure to give the V belt 23 maximum torque capacity as shown by the dash line of Figure 3 in order to prevent the V belt 23 from slipping even if reverse input torque Ts occurs. In addition, the illustrated embodiment of the present invention carries out the present hydraulic pressure control discussed above when the running mode selection switch is operated to select the off-road running state. However, it can also carry out the present hydraulic pressure control when other detection methods, for example, by detecting the friction coefficient on road surface on which the vehicle runs, detects the off-road run.

However, the hydraulic pressure which corresponds to the total torque of the actual positive input torque Tp and the reverse input torque Ts varies as shown, for example, by the solid line, so that a difference with the maximum hydraulic pressure as shown by the dash line becomes surplus hydraulic pressure because keeping the maximum hydraulic pressure is no longer necessary. This surplus hydraulic pressure caused an increase in friction within the continuously variable transmission 20, a rise in oil temperature, and a drop in durability of the hydraulic fluid pump 31.

However, in the past, no actions have been taken to prevent the V belt 23 from slipping with the maximum hydraulic pressure, because estimating the magnitude of reverse input torque was difficult. As illustrated in Figure 4, among a speed ratio of the continuously variable transmission 20, a turbine torque is substituted for the positive input torque Tp and the reverse input torque Ts. This relationship illustrated in Figure 4 is used to calculate the reverse input torque Ts from the speed ratio of the continuously variable transmission 20 and the turbine torque.

Figure 4 illustrates that the reverse input torque Ts becomes small when the positive input torque Tp becomes large, and the reverse input torque Ts becomes large when the speed ratio becomes small, if the positive input torque Tp is kept constant within an area in which the positive input torque Tp is large. This is because that it is thought that the reverse input torque Ts becomes small because a change in rotation of the drive wheel 70 is small upon input from the drive wheel side when the positive input torque Tp is large.

Characteristic lines for calculation of reverse input torque Ts shown in Figure 4 can be expressed by the following equation (3:

$$Ts = -k \times \frac{Tt}{ip \times if} \tag{3}$$

where, Ts: reverse input torque (spike torque),
Tp: positive input torque (turbine torque),
Tt: input torque from road surface (experimental value),
ip: speed ratio,
if: reduction ratio, and
k: predetermined value that is set according to specifications of continuously variable section.

Therefore, this implementation controls the hydraulic pressure supplied to each of the pulleys 21 and 22 to the most suitable hydraulic pressure that is given by restraining the surplus hydraulic pressure without causing any slipping of the V belt 23. In particular, the control unit 40 controls the hydraulic pressure supplied to each pulley depending on the reverse input torque Ts after calculating the reverse input torque Ts from Figure 4 based on the speed ratio of the continuously variable transmission 20 and the positive input torque Tp.

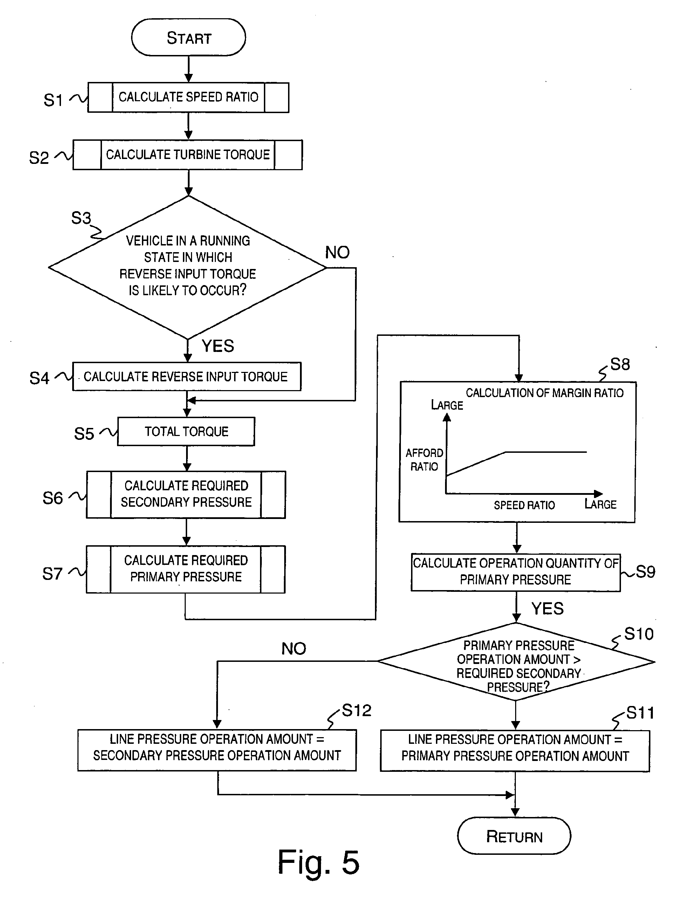

Next, the map shown in Figure 4 is used to calculate the reverse input torque Ts. Using the flow chart shown in Figure 5, a method of calculating the hydraulic pressure supplied to each of the pulleys 21 and 22 will be explained when considering the reverse input torque Ts and the positive input torque Tp.

This hydraulic pressure control is carried out by the control unit 40, and is carried out at every predetermined interval, for example, ten milliseconds.

First, the illustrated flow chart begins with step S1, where the control unit 40 calculates a speed ratio from a ratio of a primary rotational speed detected by the primary pulley rotational speed sensor 41 and the secondary pulley rotational speed detected by the secondary pulley rotational speed sensor 42.

In step S2, the control unit 40 calculates the positive input torque Tp, i.e., a turbine torque of the torque converter 50, from an input torque information of the engine 60 from the control unit 40 (a positive input torque calculation section).

This input torque information is constituted by, for example, a fuel injection amount (a fuel injection pulse) of the engine 60 and an engine rotational speed.

In step S3, the control unit 40 determines whether or not the vehicle's running state is an off-road running state in which the reverse input torque Ts is likely to occur (a running state determination section). The control unit 40 reads a signal of the off-road running mode selection switch, not illustrated, and determines the vehicle is in the off-road running state in which the reverse input torque is likely to occur when the signal from the running mode selection switch indicates the off-road running state.

The processing proceeds to step S4 when in off-road running state, or proceeds to step S5 when in on-road running state where the reverse input torque will not occur.

In step S4, the control unit 40 calculates the reverse input torque Ts using the map shown in Figure 4 from the calculated speed ratio and the positive input torque Tp (a reverse input torque calculation section). In step S5, the control unit 40 calculates the total torque of the reverse input torque Ts and the positive input torque Tp when the vehicle is in off-road running state. On the other hand, in step S5, the control unit 40 sets the positive input torque calculated in step S3 as the total torque when the vehicle is in on-road running state.

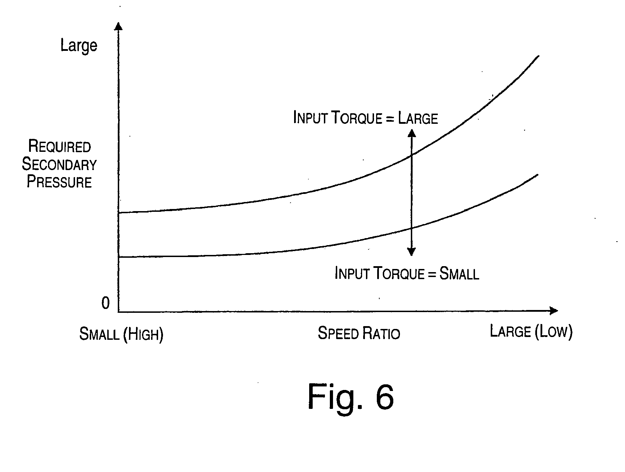

In step S6, the control unit 40 calculates the secondary pressure that is needed to supply the required hydraulic pressure to the secondary pulley 22 (hereinafter called "required secondary hydraulic pressure") by referring to a map shown in Figure 6 based on the above-mentioned speed ratio and the total torque.

In addition, this prestored map sets the relationship such that when the speed ratio becomes small (High side), the hydraulic pressure becomes low, and when the speed ratio becomes large (Low side), the hydraulic pressure becomes high. Also this prestored map sets the relationship such that when the total torque becomes large, the hydraulic pressure becomes high, and when the total torque becomes small, the hydraulic pressure becomes low.

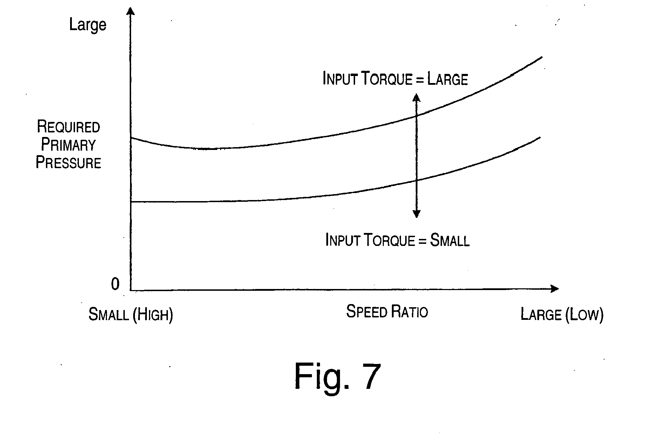

In step S7, the control unit 40 calculates the primary pressure that is needed to supply the required hydraulic pressure to the primary pulley 21 (hereinafter called "required primary hydraulic pressure") by referring to a map shown in Figure 7 based on the above-mentioned speed ratio and the total torque.

In addition, this prestored map sets the relationship such that when the speed ratio becomes small, the hydraulic pressure becomes low, and when the speed ratio becomes large, the hydraulic pressure becomes high. Also this prestored map sets the relationship such that when the speed ratio is on the small side, the hydraulic pressure is relatively high to the above-mentioned required secondary hydraulic pressure, and when the speed ratio is on the large side, the hydraulic pressure is relatively low to the above-mentioned required secondary hydraulic pressure. The large and small relationship between the required primary hydraulic pressure and the required secondary hydraulic pressure can be reversed with differing total torques.

Next, in step S8, the control unit 40 calculates a margin ratio based on the above-mentioned speed ratio to make up for a pressure loss of a primary pressure regulation device 33, which pressure loss would cause the required primary hydraulic pressure to become short irrespective of suitable supply of line pressure PL. Thus, the margin ratio gives room for the required primary hydraulic pressure in order to prevent the required primary hydraulic pressure from becoming short.

Next, in step S9, the control unit 40 calculates a primary pressure operation amount that is a target value of the primary pressure based on the above-mentioned margin ratio with the following equation.

$$\text{(Primary pressure operation amount)} = \text{(Required primary hydraulic pressure)}$$

$$\times \text{(Margin ratio)} + \text{(Offset amount)}$$

Here, the offset amount is a value that is set depending on the characteristic of the primary pressure adjustment device 33 (an additional value to hydraulic pressure) and it is a value to make up for the characteristic of pressure loss that is not completely proportional to hydraulic pressure.

After having found the primary pressure operation amount (target value) to give the required primary hydraulic pressure margin, the processing proceeds to step S10, where the control unit 40 compare this primary pressure operation amount (target pressure) to the required secondary hydraulic pressure that is found in the above-mentioned step S6. When the primary pressure operation amount is greater than the required secondary hydraulic pressure, the processing proceeds to step S 11 where the line pressure operation amount that is a target value of line pressure is set equal to the primary pressure operation amount. However, when the required secondary hydraulic pressure is greater than or equal to the amount of primary pressure operation, the processing proceeds to step S12 where the line pressure operation amount is set equal to the required secondary hydraulic pressure.

After having found the larger one of the primary pressure operation amount and the required secondary hydraulic pressure as the line pressure operation amount (target hydraulic pressure) in this way, it is converted into a control amount (duty signal, for example) that drives a solenoid of the line pressure adjustment device 32 for driving the line pressure regulation device 32.

Because the hydraulic pressure supplied to each pulley is controlled depending on the sum of the positive input torque and the reverse input torque, the present invention can surely prevent slipping of the belt 23 even if there is an input of the reverse input torque to the continuously variable transmission and can intend a drop in the supply pressure to each pulley, thereby restraining an oil temperature rise and a drop in durability of an oil pump.

GENERAL INTERPRETATION OF TERMS

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts. The term "detect" as used herein to describe an operation or function carried out by a component, a section, a device or the like includes a component, a section, a device or the like that does not require physical detection, but rather includes determining, measuring, modeling, predicting or computing or the like to carry out the operation or function. The term "configured" as used herein to describe a component, section or part of a device includes hardware and/or software that is constructed and/or programmed to carry out the desired function. Moreover, terms that are expressed as "means-plus function" in the claims should include any structure that can be utilized to carry out the function of that part of the present invention. The terms of degree such as "substantially", "about" and "approximately" as used herein mean a reasonable amount of deviation of the modified term such that the end result is not significantly changed.

While only selected embodiments have been chosen to illustrate the present invention, it will be apparent to those skilled in the art from this disclosure that various changes and modifications can be made herein without departing from the scope of the invention as defined in the appended claims. For example, the size, shape, location or orientation of the various components can be changed as needed and/or desired. Components that are shown directly connected or contacting each other can have intermediate structures disposed between them. The functions of one element can be performed by two, and vice versa. The structures and functions of one embodiment can be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiments according to the present invention are provided for illustration only, and not for the purpose of limiting the invention as defined by the appended claims and their equivalents

**Claims**

1. A hydraulic pressure control device comprising:

   a speed ratio calculation section (40) configured to calculate a speed ratio between a primary pulley (21) and a secondary pulley (22) of a belt type continuously variable transmission (20);
   a running state determination section (40) configured to determine if a vehicle running state exists in which a reverse input torque will be likely to be inputted to the primary pulley (21) from a drive wheel (70);
   a positive input torque calculation section (40) configured to calculate a positive input torque that is inputted to the primary pulley (21) from an engine (80);
   a reverse input torque calculation section (40) configured to calculate a reverse input torque based on the speed ratio and the positive input torque that were calculated;
   a primary pressure regulation section (33) configured to perform pressure regulation of hydraulic fluid supplied to the primary pulley (21);
   a secondary pressure regulation section (34) configured to perform pressure regulation of hydraulic fluid supplied to the secondary pulley (22); and
   a hydraulic pressure calculation section configured to regulate a target hydraulic pressure of hydraulic fluid supplied to the primary pulley (21) and a target hydraulic pressure of hydraulic fluid supplied to the secondary pulley (22) depending on a sum of the positive input torque and the reverse input torque that were calculated and to control the primary pressure regulation section (33) and the secondary pressure regulation section (34) obtain target hydraulic pressures of the primary pulley (21) and the secondary pulley (22).

2. The hydraulic pressure control device as recited in claim 1, further comprising

a running state changeover section (40) configured to change a running state in which the reverse input torque occurs and a running state in which the reverse input torque does not occur, and
the running state determination section (40) configured to determine a current running state depending on an output signal of the running state changeover section (40).

3. The hydraulic pressure control device as recited in claim 2, wherein

the running state determination section (40) is further configured to determine an off-road running state as the vehicle running state in which the reverse input torque is likely to occur and an off-road running state as the vehicle running state in which the reverse input torque is not likely to occur is an on-road running state, with the off-road running state having a greater speed ratio than the on-road running state.

4. The hydraulic pressure control device as recited in claim 1, wherein

the hydraulic pressure calculation section (40) is further configured to calculate torque capacity of the belt type continuously variable transmission (20) and controls the pressure regulation in a range when the calculated torque capacity is greater than the sum of the positive input torque and the reverse input torque.

Fig. 1

SLIPPING OF V BELT

P

MAXIMUM TORQUE CAPACITY OF V BELT

TOTAL TORQUE OF V BELT

POSITIVE INPUT
TORQUE Tp
(Nm)

CONTROL AREA

0

REVERSE INPUT TORQUE Ts (Nm)

## Fig. 2

HYDRAULIC PRESSURE CORRESPONDING TO POSITIVE INPUT
TORQUE AND REVERSE INPUT TORQUE

対応した油圧分

MAXIMUM HYDRAULIC PRESSURE

HYDRAULIC
PRESSURE

HYDRAULIC PRESSURE
CORRESPONDING TO Tp

SURPLUS
HYDRAULIC
PRESSURE

OFF-ROAD
SWITCH

ON (=OFF-ROAD)

OFF (=ON-ROAD)

t1

TIME t

## Fig. 3

Fig. 4

START

S1 — CALCULATE SPEED RATIO

S2 — CALCULATE TURBINE TORQUE

S3 — VEHICLE IN A RUNNING STATE IN WHICH REVERSE INPUT TORQUE IS LIKELY TO OCCUR? — NO

YES

S4 — CALCULATE REVERSE INPUT TORQUE

S5 — TOTAL TORQUE

S6 — CALCULATE REQUIRED SECONDARY PRESSURE

S7 — CALCULATE REQUIRED PRIMARY PRESSURE

S8 — CALCULATION OF MARGIN RATIO

LARGE

AFFORD RATIO

SPEED RATIO   LARGE

S9 — CALCULATE OPERATION QUANTITY OF PRIMARY PRESSURE

YES

S10 — PRIMARY PRESSURE OPERATION AMOUNT > REQUIRED SECONDARY PRESSURE?

NO

S12 — LINE PRESSURE OPERATION AMOUNT = SECONDARY PRESSURE OPERATION AMOUNT

S11 — LINE PRESSURE OPERATION AMOUNT = PRIMARY PRESSURE OPERATION AMOUNT

RETURN

Fig. 5

13

Fig. 6

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006 A
- JP 030986 A
- JP 2006030986 A
- JP 2004116606 A